# EUROPÄISCHE PATENTSCHRIFT

(11) **EP 1 789 469 B1**
(45) Veröffentlichungstag und Bekanntmachung des Hinweises auf die Patenterteilung: **15.10.2008**
(21) Anmeldenummer: 05771739.9
(22) Anmeldetag: 22.08.2005
(51) Int. Cl.: C08G 63/00, C08G 63/80, C08G 63/78

(54) **HERSTELLUNG EINES HOCHMOLEKULAREN POLYKONDENSATES**
PRODUCTION OF A HIGH-MOLECULAR POLYCONDENSATE
FABRICATION D'UN POLYCONDENSAT DE POIDS MOLECULAIRE ELEVE

(30) Priorität: 25.08.2004 DE 102004041366; 07.04.2005 DE 102005016146
(43) Veröffentlichungstag der Anmeldung: 30.05.2007
(73) Patentinhaber: Bühler AG, 9240 Uzwil (CH)
(72) Erfinder: CHRISTEL, Andreas, CH-9524 Zuzwil (CH); FERREIRA, Claudemiro, MG 37701-018 Pocos de Caldas (BR)
(74) Vertreter: Frommhold, Joachim
(86) Internationale Anmeldenummer: PCT/CH2005/000489
(87) Internationale Veröffentlichungsnummer: WO 2006/021118

(56) Entgegenhaltungen:
- EP-A- 0 222 714
- EP-A- 0 717 061
- EP-A- 0 819 716
- EP-A- 0 836 921
- EP-A- 0 943 649
- EP-A- 1 013 691
- WO-A-20/04101140
- US-A- 3 657 388
- US-A- 4 330 661
- US-A- 5 362 844
- US-A- 6 048 957

## Beschreibung

Die Erfindung bezieht sich auf ein Verfahren zur Herstellung eines hochmolekularen Polykondensates aus einem verfestigten Polykondensatprepolymeren durch Festphasen-Polykondensation, wobei die Polykondensationsspaltprodukte aus der Festphasen-Polykandensationsreaktion mittels eines Prozessgases vom Produkt entfernt werden und das Prozessgas anschliessend von den Polykondensationsspaltprodukten gereinigt und im wesentlichen rezykliert wird.

Verfahren zur Herstellung hochmolekularer Polykondensate mittels eines Schrittes der Festphasen-Polykondensation sind im Stand der Technik bekannt. Üblicherweise erfolgt die Festphasen-Polykondensation nach einer Flüssigphasenkondensation, und nach der Festphasen-Polykondensation erfolgt üblicherweise ein Aufschmelzen zur Verarbeitung der Polykondensate. Da in all diesen Verfahrensscbritten breite thermische Zyklen durchlaufen werden, ist die Energieeffizienz der Herstellungskette von Produkten aus Polykondensaten eher schlecht.

Es gibt verschiedene Ansätze, um die Energieeffizienz der beschriebenen Prozesskette zu verbessern:

Eine Möglichkeit ist es, die Prozessenergie aus der Flüssigphasenkondensation in die Festphasen-Polykondensation zu übertragen. Ein solches Verfahren ist zum Beispiel in der WO 01/12698 A1 beschrieben. Dadurch ergibt sich aber der Nachteil, dass der Bearbeitungsschritt der Flüssigphasenkondensation und der Bearbeitungsschritt der Festphasen-Polykondensation mit einander gekoppelt werden müssen.

Eine weitere Möglichkeit ist es, die Prozessenergie aus der Festphasen-Polykondensa-tion auf den nachfolgenden Verarbeitungsprozess zu übertragen. Ein Beispiel ist die direkte Spritzgussverarbeitung von nachkondensiertem, warmen und trockenem Polyethylenterephthalat Hier ergibt sich aber der Nachteil, dass der Bearbeitungsschritt der Festphasen-Polykondensation und der Verarbeitungsschritt mit einander gekoppelt werden müssen.

Die US 5362844 beschreibt ein Verfahren zur Reduktion von Acetaldehyd, in dem ein Polyester über mehrere Stunden bei einer Temperatur, die unterhalb eines Erweichungspunktes liegt, der unterhalb der Glasübergangstemperatur liegt, vorbehandelt wird. Die Möglichkeit einer Energieeinsparung durch Verwendung von Prozessabwärme im Vorbehandlungsschritt wird zwar erwähnt, ist jedoch begrenzt, da es durch die niedrige Behandlungstemperatur nur schlecht möglich ist, die Abgasströme aus einer Nachkondensationsanlage, die auf einem deutlich höheren Temperaturniveau anfallen, effizient zu nutzen. Die Energieeinsparung ist dementsprechend gering.

Ein weiterer Nachteil ist die lange Behandlungszeit, was eine energieintensive Verdichtung des eingesetzten Prozessgases bedingt, wenn das Aufheizen im Verweilzeitapparat stattfindet, oder den Einsatz mehrerer Apparate oder Apparatestufen zum getrennten Aufheizen und Behandeln bedingt. Ebenfalls nachteilig ist der notwendig tiefe Taupunkt in der nachfolgenden Kristallisationsstufe, was zu einer Erhöhung der Prozessenergie führt.

WO 2004/101140 A1 beschreibt ein Verfahren und einen Reaktor zur kontinuierlichen Herstellung von Polymeren. EP 1 013 691 A2 beschreibt ein Verfahren zur Herstellung von Polyesterharz. EP 0 943 649 beschreibt Polyesterharze mit geringem Acetaldehyd-Grehalt. US 6,048,957 beschreibt ein Verfahren zur Herstellung von Polyestern mit einem Schritt zur Kristallisation und einem Schritt zur Festphasen-Polykondensation. EP 0 836 921 A2 beschreibt einen Kühlprozess in einem Verfahren zur Herstellung von Polyester- und/oder Polyamidharzen mit einem Schritt zur Kristallisation und einem Schritt zur Festphasen-Polykondensation. EP 0 819 716 A2 beschreibt ein Verfahren zur Herstellung von Polyesterharzen, ebenfalls unter Erwähnung eines Schrittes zur Kristallisation und eines Schrittes zur Festphasen-Polykondensation. EP 0 717 061 A2 beschreibt ein Verfahren zur Herstellung von Polyesterharzen, ebenfalls unter Erwähnung eines Schrittes zur

WO 2004/101140 A1 beschreibt ein Verfahren und einen Reaktor zur kontinuierlichen Herstellung von Polymeren. EP 1 013 691 A2 beschreibt ein Verfahren zur Herstellung von Polyesterharz. EP 0 943 649 beschreibt Polyesterharze mit geringem Acetaldehyd-Gehalt. US 6,048,957 beschreibt ein Verfahren zur Herstellung von Polyestern mit einem Schritt zur Kristallisation und einem Schritt zur Festphasen-Polykondensation. EP 0 836 921 A2 beschreibt einen Kühlprozess in einem Verfahren zur Herstellung von Polyester- und/oder Polyamidharzen mit einem Schritt zur Kristallisation und einem Schritt zur Festphasen-Polykondensation. EP 0 819 716 A2 beschreibt ein Verfahren zur Herstellung von Polyesterharzen, ebenfalls unter Erwähnung eines Schrittes zur Kristallisation und eines Schrittes zur Festphasen-Polykondensation. EP 0 717 061 A2 beschreibt ein Verfahren zur Herstellung von Polyesterharzen, ebenfalls unter Erwähnung eines Schrittes zur Kristallisation und eines Schrittes zur Festphasen-Polykondensation. EP 0 222 714 A2 beschreibt ein Verfahren zur Herstellung von Polyesterharzen, ebenfalls unter Erwähnung eines Schrittes zur Kristallisation und eines Schrittes zur Festphasen-Polykondensation. US-A-4,330,661 beschreibt ein Verfahren zur Herstellung von Polyesterharzen, ebenfalls unter Erwähnung eines Schrittes zur Kristallisation und eines Schrittes zur Festphasen-Polykondensation. US 3,657,388 beschreibt ein Verfahren zur Festphasen-Polykondensation von Polymeren. US 6,362,844 beschreibt ein Verfahren zur Herstellung von Polyester für Lebensmittel-Verpackungen, ebenfalls unter Erwähnung eines Schrittes zur Kristallisation und eines Schrittes zur Festphasen-Polykondensation.

Keines dieser Dokumente offenbart eine Produkttemperatur im Bereich von 0-40°C am Eingang vor einem Aufheizapparat, in welchem das Prepolymer vor dem Kristallisieren aufgeheizt wird.

Kristallisation und eines Schrittes zur Festphasen-Polykondensation. EP 0 222 714 A2 beschreibt ein Verfahren zur Herstellung von Polyesterharzen, ebenfalls unter Erwähnung eines Schrittes zur Kristallisation und eines Schrittes zur Festphasen-Polykondensation. US-A-4,330,661 beschreibt ein Verfahren zur Herstellung von Polyesterharzen, ebenfalls unter. Erwähnung eines Schrittes zur Kristallisation und eines Schrittes zur Festphasen-Polykondensation. US 3,657,388 beschreibt ein Verfahren zur Festphasen-Polykondensation von Polymeren. US 6,362,844 beschreibt ein Verfahren zur Herstellung von Polyester für Lebensmittel-Verpackungen, ebenfalls unter Erwähnung eines Schrittes zur Kristallisation und eines Schrittes zur Festphasen-Polykondensation.

Keines dieser Dokumente offenbart eine Produkttemperatur im Bereich von 0-40°C am Eingang vor einem Aufheizapparat, in welchem das Prepolymer vor dem Kristallisieren aufgeheizt wird.

Es ist die Aufgabe der vorliegenden Erfindung, eine verbesserte Energieeffizienz der Herstellkette von Polykondensatprodukten zu erzielen, ohne dabei eine Abhängigkeit zwischen den einzelnen Bearbeitungsschritten einzugehen.

Die Aufgabe wird dadurch gelöst, dass ein unabhängiges Festphasen-Polykondensationsverfahren mit sehr geringem spezifischern Energieeintrag zur Verfügung gestellt wird.

Gemäss Anspruch 1 wird dazu ein Festphasen-Polykondensationsverfahren mit einem spezifischen Energieeintrag von weniger als 120KWh/t zur Verfügung gestellt.

Dies wird dadurch erreicht, dass Energieinhalte vom Produkt, die gegen Ende des Prozesses abgeführt werden müssen, dazu verwendet werden, um die Notwendigkeit des Aufheizens von Produktströmen oder anderen Wärmeträgerströmen im Prozess zu reduzieren.

Gemäss einem der Unteransprüche erfolgt dieser Energieübertrag durch einen separaten Aufheizschritt mit der Abluft aus einem nachfolgenden Prozessschritt.

Gemäss einem weiteren Unteranspruch erfolgt dieser Energieübertrag durch eine Kristallisation mittels der Abluft aus einem nachfolgenden Prozessschritt.

Weitere vorteilhafte Ausführungen des erfindungsgemässen Verfahrens sind in den Unteransprüchen beschrieben.

Bei dem Polykondensat handelt es sich um ein kristallisierbares, thermoplastisches Polykondensat, wie zum Beispiel Polyamid, Polyester, Polycarbonat oder Polylactid, das durch eine Polykondensationsreaktion unter Abspaltung eines niedermolekularen Reaktionsproduktes gewonnen wird. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im wesentlichen ist das so gewonnene Polykondensat linear, wobei eine geringe Anzahl an Verzweigungen entstehen kann.

Bei Polyamid handelt es sich dabei um ein Polymer, das durch Polykondensation aus seinen Monomeren, entweder einer Diamin-Komponente und einer Dikarbonsäure-Komponente oder einem bifunktionellen Monomer mit einer Amin- und einer Karbonsäureendgruppe, gewonnen wird, wobei die Reaktion auch über eine Ringöffnungspolymerisation, zum Beispiel aus Lactamen erfolgen kann.

Bei Polyester handelt es sich dabei um ein Polymer, das durch Polykondensation aus seinen Monomeren, einer Diol-Komponente und einer Dikarbonsäure-Komponente, gewonnen wird. Verschiedene, meist lineare oder zyklische Diol-Komponenten kommen zum Einsatz. Ebenso können verschiedene meist aromatische Dikarbonsäure-Kompo-nenten zum Einsatz kommen. Anstelle der Dikarbonsäure kann auch ihr entsprechender Dimethylester eingesetzt werden.

Typische Beispiele der Polyester sind Polyethylenterephthalat (PET), Polybutylenterephthalat (PBT) und Polyethylennaphthalat (PEN), die entweder als Homopolymer oder als Copolymere zum Einsatz kommen.

Bei dem Polykondensat kann es sich um ein Neumaterial oder um ein Rezyklat handeln.

Dem Polyethylkondensat können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Schäummittel chemischer und physikalischer Art, Füllstoffe wie zum Beispiel Nukleierungsmittel, Barriere oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

Bei dem Polyethylenterephthalat handelt es sich um ein kristallisierbares, thermoplastisches Polyester, das durch eine Polykondensationsreaktion unter Abspaltung nieder-molekularer Reaktionsprodukte gewonnen wird. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes erfolgt. Im Wesentlichen ist das so gewonnene Polyester linear, wobei eine geringe Anzahl an Verzweigungen entstehen kann.

Das Polyethylenterephthalat wird aus seinen Monomeren, einer Diol-Komponente und einer Dikarbonsäure-Komponente, gewonnen, wobei die Diol-Komponenten zum Gross-teil aus Ethylenglykol (1,2 Ethandiol) und die Dikarbonsäure-Komponenten zum Gross-teil aus Terephthalsäure bestehe. Als Comonomere kommen weitere lineare, zyklische oder aromatische Diol- und Dikarbonsäureverbindungen in Frage. Typische Comonomere sind Diethylenglykol (DEG), Isopthalsäure (IPA) oder 1,4-Bis-hydroxymethyl-cyclohexan (CHDM).

Die Monomere werden in einem ersten Schritt in flüssiger Phase zu einem Prepolymer polymerisiert bzw. polykondensiert. Üblicherweise erfolgt die Herstellung der so gewonnenen Polykondensatprepolymerschmelze in einem kontinuierlichen Prozess.

Bei der Herstellung einer Polyesterprepolymerschmelze findet üblicherweise zunächst eine Veresterungsstufe und dann eine Prepolykondensationsstufe statt. Im konventionellen Polyesterherstellprozess folgt eine Polykondensationsstufe im Hochviskositätsreaktor (auch Finisher genannt). (Vergleiche zum Beispiel: Modem Polyesters, Wiley Series in Polymer Science, Edited by John Scheirs, J. Wiley & Sons Ltd, 2003; Kapitel 4.2). Die Polyesterherstellung kann auch in einem Batch-Prozess erfolgen (Vergleiche zum Beispiel: Modem Polyesters, Wiley Series in Polymer Science, Edited by John Scheirs, J. Wiley & Sons Ltd, 2003; Kapitel 4.1).

Alternativ kann die oben erwähnte Polykondensationsstufe im Hochviskositätsreaktor weggelassen werden. Dadurch entsteht ein niedrigviskoses Polyesterprepolymer mit einem Polymerisationsgrad (DP), der deutlich unter dem Polymerisationsgrad des Polyesters nach der nachfolgenden Festphasenbehandlung liegt. Üblicherweise liegt der Polymerisationsgrad des niedrigviskosen Prepolymers unter 60%, insbesondere unter 50% des Polymerisationsgrades des in der Festphase nachkondensierten Polyesters.

Eine weitere Alternative bietet das Verwenden bereits polykondensierter Polyester die in ihrer Rohform zum Beispiel als Flaschenschnitzel oder durch Aufschmelzen in einer homogenisierten Form vorliegen. Ebenso kann durch Aufschmelzen und Depolymerisieren ein bereits polykondensierter Polyester auf ein geeignetes Viskositätsniveau gebracht werden.

### Granulation

Das Verfestigen der Polykondensatprepolymerschmelze erfolgt üblicherweise durch Granulation, obwohl auch alternative Verfestigungsmethoden zur Erzeugung fester Prepolymerpartikel einsetzbar sind, wie zum Beispiel Sinterung von Fäden, Schneiden von Folien oder Mahlen von abgekühlten Stücken.

Bei der Granulation wird die Prepolymerschmelze in eine definierte Form überführt und verfestigt. Dabei wird die Prepolymerschmelze zum Beispiel durch ein Düse mit einer Öffnung oder einer Vielzahl von Öffnungen gepresst und geschnitten oder vertropft.

Die Düsenöffnungen sind üblicherweise rund, können aber auch ein anderes Profil, wie zum Beispiel schlitzförmig Öffnungen darstellen. Das Schneiden kann sowohl direkt am Düsenaustritt erfolgen oder aber erst nach Durchlaufen einer Behandlungsstrecke.

Durch die Abkühlung wird die Prepolymerschmelze verfestigt. Dies kann mit Hilfe eines flüssigen Kühlmediums (z.B. Wasser, Ethylenglykol) oder gasförmigen Kühlmediums (z. B. Luft, Stickstoff, Wasserdampf) erfolgen, oder durch Kontakt mit einer kalten Oberfläche, wobei auch Kombinationen der Kühlmedien denkbar sind.

Die Abkühlung kann sowohl gleichzeitig, wie auch vor oder nach dem Formen zu Partikeln statt finden.

Liegt eine Prepolymerschmelze aus einem konventionellen Polyesterherstellprozess vor, so werden üblicherweise Granulationsprozesse wie Stranggranulation, Wasserringgranulation, Unterwassergranulation oder Kopfgranulation (auch hot face - Granulation) verwendet.

Liegt eine niederviskose Prepolymerschmelze vor, so werden üblicherweise Granulationsprozesse wie Vertropfung, Wasserringgranulation, Unterwassergranulation oder Kopfgranulation (auch hot face - Granulation) verwendet.

Die mittlere Granulatgrösse liegt üblicherweise zwischen 0,4mm und 10mm, bevorzugterweise zwischen 0,7mm und 3mm. Als mittlere Granulatgrösse gilt der statistische Mittelwert des mittleren Granulatdurchmessers, der sich aus dem Durchschnitt aus Granulathöhe, -länge und -breite ergibt.

Die Granulate können eine definierte Granulatform, wie zum Beispiel zylinderförmig, kugelförmig, tropfenförmig, kugelähnlich oder einer Design-Form, wie sie zum Beispiel in EP-A-0 541 674 vorgeschlagen ist, aufweisen oder eine unregelmässig körnige Produktform, wie sie aus einem Mahlprozess oder Brechprozess entsteht, aufweisen.

Es können solide Granulate oder poröse Granulate, die zum Beispiel durch Sinterung, Schäumung und dergleichen gewonnen werden, verwendet werden.

Mit dem Begriff Festphasen-Polykondensation werden sämtliche Prozessschritte zusammengefasst, die notwendig sind, um aus dem verfestigten Prepolykondensat in fester Phase ein hochmolekulares Polykondensat herzustellen. Dazu gehören Schritte zum Aufheizen, zur Kristallisation, zur Reaktion und zum Abkühlen. Weitere Behandlungsschritte, wie z.B. die Behandlung mit Additiven können eingeschlossen sein.

Die Prozessschritte erfolgen in den jeweils für den Schritt geeigneten Apparaten. Es können aber auch mehrere Prozessschritte in einem Apparat gleichzeitig oder in mehreren Stufen durchgeführt werden. Ebenso können mehrere Apparate für einen Prozessschritt verwendet werden.

Erfindungsgemäss wird das Polykondensatprepolymer dem Prozess "kalt" zugeführt, wie es zum Beispiel nach der Lagerung in einem Silo, Container oder Kleingebinde vorliegt. Das heisst, es wird nicht unter Erhaltung eines wesentlichen Anteils des Wärmeinhaltes aus einer vorhergehenden Prozessstufe in den Prozess geführt. Das Polykondensatprepolymer wird mit einer Umgebungstemperatur also unter 40°C, insbesondere zwischen -0 und 25°C dem Prozess zugeführt.

Während der Festphasenpolykondensation wird die Produkttemperatur um zumindest 160°C, insbesondere um zumindest 180°C erhöht, wodurch die Produkttemperatur auf zumindest 185°C, insbesondere zumindest 205°C angehoben wird.

Da die Energieeffizienz eines Prozesses mit zunehmender Durchsatzleistung gesteigert werden kann sieht eine bevorzugte Ausführung der Erfindung vor, dass die Festphasenpolykondensation kontinuierlich erfolgt und der Produktdurchsatz zumindest 30t/Tag, insbesondere zumindest 300t/Tag beträgt.

Trotz der Energievorteile, die sich ergeben, wenn sämtliche Prozessschritte übereinander angeordnet werden und das Produkt durch Gravitation von einer Prozessstufe zur nächsten geführt wird, so ist es bei Anlagen mit hohen Durchsatzleistungen von Vorteil das Polykondensat im Verlaufe des Prozesses zumindest einmal mit einer Fördervorrichtung auf ein höheres Niveau anzuheben, um die Bauhöhe der Anlage zu begrenzen.

Das Anheben des Kristallisationsgrades der Prepolymergranulate erfolgt nach den im Stand der Technik bekannten Verfahren. Üblicherweise erfolgt die Kristallisation auf thermischen Weg, wodurch ein thermisch teilkristallisiertes Polyethylenterephthalat entsteht. Ebenfalls denkbar jedoch weniger geeignet ist lösemittelinduzierte Kristallisation und Kristallisation durch mechanische Verstreckung.

Die Kristallisation kann in mehreren Stufen, sowohl vor, während als auch nach dem Granulationsschritt, statt finden. Dazu müssen die Prepolymergranulate bei einer geeigneten Kristahisationstemperatur behandelt werden.

Bei der Kristallisation soll zumindest ein Kristallisationsgrad erreicht werden, der eine Behandlung in der nachfolgenden Festphasen-Polykondensation erlaubt, ohne dass es dort zu Verklebungen oder Klumpenbildungen kommt.

Der geeignete Temperaturbereich wird ersichtlich, wenn man die Kristallisationshalbwertszeit (t_{½}) gemessen im DSC als Funktion der Temperatur aufzeichnet. Er ist nach oben und unten begrenzt durch die Temperatur, bei der die Kristallisationshalbwertszeit das ungefähr 10-Fache der minimalen Kristallisationshalbwertszeit t_{½min} erreicht. Da sehr kurze Kristallisationshalbwertszeiten (t_{½}) nur schwer bestimmbar sind, wird als Minimalwert t_{½min} = 1 Minute eingesetzt.

Bei Polyethylenterephthalat liegt der Temperaturbereich zwischen 100 und 220°C, und es wird ein Kristallisationsgrad von zumindest 20%, bevorzugterweise von zumindest 30% erreicht.

Erfindungsgemäss liegt die Temperatur der Prepolymergranulate nach dem Granulationsschritt unterhalb der geeigneten Kristallisationstemperatur. Somit müssen die Prepolymergranulate aufgeheizt werden. Dies kann zum Beispiel über eine beheizte Wand des Kristallisationsreaktors, über beheizte Einbauten im Kristallisationsreaktor, durch Strahlung oder durch das Einblasen eines heissen Prozessgases erfolgen.

Die geeignete Kristallisationszeit ergibt sich aus der Zeit, um das Produkt auf die Kristallisationstemperatur aufzuheizen, plus zumindest der Kristallisationshalbwertszeit bei der gegebenen Temperatur, wobei bevorzugterweise 2 - 20 Halbwertszeiten zur Aufheizzeit dazugezählt werden, um eine ausreichende Kristallisation zu erreichen.

Um ein Verkleben der kristallisierenden Prepolymergranulate zu verhindern, sollen diese relativ zueinander in Bewegung gehalten werden. Dies kann zum Beispiel durch den Einsatz eines Rührwerkes, eines bewegten Behälters oder unter Einwirkung eines Fluidisierungsgases erfolgen.

Besonders geeignete Kristallisationsreaktoren sind Fliessbett- oder Wirbelbettkristallisatoren, da diese nicht zur Staubbildung neigen.

Gleichzeitig mit dem Anheben des Krisiallisationsgrades, werden auch allfällige Reste einer Flüssigkeit aus dem Granulierprozess entfernt.

Wird im Kristallisationsprozess ein Prozessgas im Kreislauf verwendet, so muss diesem genügend Frischgas oder gereinigtes Prozessgas zugesetzt werden, um eine übermässige Anreicherung der Flüssigkeit zu verhindern. Die zur Festphasen-Polykondensation verwendeten Prozessgase können auch im Kristallisationsschritt eingesetzt werden, wobei in den unterschiedlichen Prozessstufen auch unterschiedliche Prozessgase zum Einsatz kommen können.

Gemäss einer Ausführung der vorliegenden Erfindung wird das Polykondensat vorgängig zur Kristallisation aufgeheizt, was durch Verwendung eines Prozessgasstroms, aus einem Schritt im weitem Verlauf der Festphasen-Polykondensation, erfolgt.

Besonders geeignet dazu ist ein Prozessgasstrom aus einem Schritt zur Kühlung des Polykondensates. Insbesondere bevorzugt ist ein Prozessgasstrom aus einem Schritt, der unter Luft erfolgt.

Das Aufheizen des Polykondensates soll auf eine Temperatur Tv erfolgen, die grösser als 50°C insbesondere grösser als 75°C beträgt, wobei Tv bevorzugterweise im Bereich Tg - 30°C bis Tg + 30°C, insbesondere im Bereich Tg bis Tg + 20°C liegt, wobei Tg die Glasübergangstemperatur des Polykondensates bezeichnet.

Das Aufheizen kann in einem beliebigen Reaktor erfolgen. Bevorzugt ist ein Apparat, in dem das Produkt bewegt wird, wie zum Beispiel ein gerührter oder bewegter Reaktor, ein Fliessbettapparat oder ein Wirbelbettapparat.

Besonders bevorzugt ist ein Apparat, der mit unterschiedlichen Gasdurchströmungsmengen und einem mg/mp Verhältnis >2 betrieben werden kann, wodurch eine Regelung der Produktauslasstemperatur aus dem Aufheizschritt, auch bei Schwankungen der Temperatur des Prozessgasstroms, aus einem Schritt im weitern Verlauf der Festphasen-Polykondensation, über die Gasflussmenge erfolgen kann.

Das Aufheizen erfolgt bevorzugterweise mit einer mittleren Verweilzeit innerhalb weniger Minuten bis maximal einer Stunde, kann aber auch in einem Vorratsbehälter mit längerer Verweilzeit erfolgen, wenn Tv nicht mehr als eine Stunde, insbesondere 20 Minuten überschritten wird.

Gleichzeitig mit dem Aufheizen des Polykondensates erfolgt ein Trocknen des Polykondensates, falls dies noch mit Feuchtigkeit oder einer anderen flüchtigen Substanz versetzt ist. Dies erlaubt eine Reduktion flüchtiger Substanzen in späteren Prozessschritten, wodurch sich der Verunreinigungsgrad der zugehörigen Prozessgasströme verringert und somit eine Reduktion der Gasmenge, die gereinigt werden muss, erlaubt. Insbesondere erfolgt eine Trocknung eines von der Granulation her feuchten Polykondensates. Dazu werden die Prozessgasmenge und Temperatur so gewählt, dass eine Trocknung des Polykondensates auf einen Feuchtigkeitsgehalt zwischen 50ppm Wasser und 2000ppm Wasser, insbesondere zwischen 20ppm Wasser und 1 000ppm Wasser erfolgt.

Gemäß einer weiteren Ausführung der vorliegenden Erfindung wird das Polykondensat während der Kristallisation aufgeheizt, was durch Verwendung eines Prozessgasstroms, aus einem Schritt im weiteren Verlauf der Festphasen-Polykondensation, erfolgt.

Besonders geeignet dazu ist ein Prozessgasstrom aus einem Schritt zur Kühlung des Polykondensates. Insbesondere bevorzugt ist ein Prozeßgasstrom aus einem Schritt, der unter Luft erfolgt.

Zur Kristallisation ist ein Aufheizen des Polykondensates auf eine Temperatur Tc erforderlich, wobei Tc in einem Temperaturbereich liegt, in dem die Kristallisationshalbwertszeit des Polykondensates weniger als das Zehnfache der minimalen Kristallisationshalbwertszeit (t_{½min}) des Polykondensates beträgt. Dabei wird für t_{½min} als Minimalwert 1 Minute eingesetzt. Für Polyethylenterephthalat liegt Tc üblicherweise im Bereich 100°C bis 220°C, insbesondere im Bereich 120°C bis 200°C, wobei bei zunehmenden Comonomer-Gehalt ein engerer Temperaturbereich ergibt.

Das Aufheizen kann in einem beliebigen Kristallisatxonsreaktor erfolgen. Bevorzugt ist ein Apparat, in dem das Produkt bewegt wird, wie zum Beispiel ein gerührter oder bewegter Reaktor, ein Fliessbettapparat oder ein Wirbelbettapparat.

Das Molekulargewicht der Polykondensatgranulate wird durch eine Festphasen-Polykondensationsreaktion unter Abspaltung von Polykondensationsspaltprodukten auf einen höheren Polymerisationsgrad gebracht.

Liegt ein Granulat aus einer Prepolymerschmelze aus einem konventionellen Herstellprozess vor, so wird der Polymerisationsgrad üblicherweise zwischen 10% und 70% angehoben, wobei ein Anstieg um zumindest 0,15dl/g bevorzugt ist.

Liegt ein Granulat aus einer niederviskosen Prepolymerschmelze vor, so wird der Polymerisationsgrad auf zumindest das 1,67-fache, insbesondere zumindest das 2-fache des Prepolymers angehoben.

Die Festphasen-Polykondensationsreaktion erfolgt nach den im Stand der Technik bekannten Verfahren und findet zumindest während des Schrittes des Aufheizens auf eine geeignete Nachkondensationstemperatur und während der Nachkondensationsreaktion statt. Dabei kommen im Wesentlichen kontinuierliche Prozesse zum Einsatz, die zum Beispiel in Apparaturen wie Fliessbett-, Sprudelbett- oder Festbettreaktoren sowie in Reaktoren mit Rührwerkzeugen oder sich selber bewegenden Reaktoren, wie Drehrohrofen, statt finden. Die Festphasen-Polykondensationsreaktion kann sowohl bei Normaldruck, bei erhöhtem Druck oder unter Vakuum stattfinden.

Erfindungsgemäss werden die Polykondensationsspaltprodukte aus der Festphasen-Polykondensationsreaktion mittels eines Prozessgases (Schleppgas, carrier gas) entfernt. In kontinuierlichen Prozessen mit Prozessgas umströmt das Prozessgas dabei das Polykondensat im Gleich-, Gegen- oder Kreuzstrom. Die Schleppgasmenge muss ausreichend sein, um die an die Oberfläche der Partikel diffundierten Reaktionsprodukte und allfällige Kontaminanten, wie zum Beispiel Carbonylverbindungen aus dem Herstellprozess oder Verunreinigungen aus einem früheren Gebrauch, aus dem Reaktionsschritt auszutragen.

Erfolgt der Schritt des Aufheizens durch Einwirkung eines Prozessgases, so wird eine hohe spezifischen Gasmenge (mg/mp = 2 bis 20, insbesondere 5 bis 13) verwendet, wodurch sich im wesentlichen die Temperatur des Produktes an die Temperatur des Gases annähert.

Erfolgt der Schritt des Aufheizens durch andere Energieeinträge, wie zum Beispiel über eine beheizte Oberfläche, oder über eine Strahlung, so ist es trotzdem von Vorteil, wenn ein Prozessgas das Produkt durchströmt oder Vakuum anliegt.

Der Schritt der Nachkondensationsreaktion kann mit einer niedrigen spezifischen Gasmenge (mg/mp =0,1 bis 1,5, insbesondere 0,3 bis 1,0) erfolgen, wodurch sich im wesentlichen die Temperatur des Gases an die Temperatur des Produktes annähert, was ermöglicht, das Prozessgas mit einer Temperatur, die unterhalb der Nachkondensationstemperatur liegt, dem Prozess zuzuführen.

Dabei ist mp die Summe der Masse aller dem Prozess zugeführter Produktströme, und mg die Summe der Masse aller dem Prozess zugeführter Gasströme.

Die Zirkulation der Prozessgase wird durch Gasverdichter, wie zum Beispiel Ventilatoren, Gebläse oder Kompressoren erreicht.

Als Prozessgas kommen Luft oder Inertgase wie zum Beispiel Stickstoff oder CO₂, sowie Gemische aus Prozessgasen in Frage. Die Prozessgase können Additive enthalten, die entweder reaktiv auf das zu behandelnde Produkt einwirken oder sich passiv auf dem zu behandelnden Produkt ablagern.

Erfindungsgemäss wird das Prozessgas zumindest teilweise im Kreislauf geführt.

Um eine Beeinträchtigung der Polykondensationsreaktion zu vermindern, wird das Prozessgas von unerwünschten Produkten, insbesondere Spaltprodukten der Polykondensationsreaktionen gereinigt. Spaltprodukte wie Wasser, Ethylenglykol, Methyldioxolan oder Aldehyde (z.B. Acetaldehyd) sollen dabei auf Werte unter 100ppm, insbesondere auf Werte unter 10ppm reduziert werden. Zur Erzielung eines Gleichgewichtes kann es notwendig sein, eine Restmenge an Reaktionsprodukten im Prozessgas zu belassen.

Die Reinigung kann durch im Stand der Technik bekannte Gasreinigungssysteme, wie zum Beispiel Verbrennungssysteme (katalytische Verbrennungssysteme), Gaswäscher, Adsorptionssysteme oder Kühlfallen erfolgen. Eine besondere Ausführung der vorliegenden Erfindung sieht vor, dass die Reinigung des Prozessgases mittels einer Waschflüssigkeit erfolgt, und dass die Waschflüssigkeit anschliessend in einem Verfabrensschritt der Prepolymerherstellung verwendet wird. Die Reinigung des Prozessgases kann dabei in einer oder mehreren Stufen erfolgen, wobei die Waschflüssigkeit die jeweiligen Stufen nur einmal durchläuft oder im Kreislauf geführt wird, wovon ein Überlauf der Prepolymerherstellung zugeführt wird. Zum Beispiel kann für die Herstellung von Polyethylenterephthalat Ethylenglykol als Waschflüssigkeit verwendet werden.

Die geeignete Nachkondensationstemperatur liegt in einem Temperaturbereich von 185°C bis 24°C, wobei Temperaturen unter 220°C bevorzugt sind.

Die geeignete Nachkondensationszeit liegt im Bereich von 2 bis 100 Stunden, wobei aus wirtschaftlichen Gründen Verweilzeiten von 6 bis 30 Stunden bevorzugt sind.

Optional kann der Schritt zur Kristallisation und der Schritt des Aufheizens auf eine geeignete Nachkondensationstemperatur gleichzeitig oder zumindest im gleichen Reaktor erfolgen, wobei der dazu verwendete Reaktor in mehrere Prozesskammern getrennt sein kann, in denen unterschiedliche Prozessbedingungen (z.B. Temperatur und Verweilzeit) vorherrschen können.

Der spezifische Energieeintrag ist die Summe aller thermischer und mechanischer Energie, die dem Prozess zugeführt wird, bezogen auf die verarbeitete Produktmenge.

Als Grenzen des Prozesses gelten der Produkteintritt in den Prozess, vor dem ersten Behandlungsschritt, bis zum Produktaustritt aus dem Prozess, nach dem letzten Behandlungsschritt, wobei das Produkt mit Umgebungstemperatur, also maximal 40°C, üblicherweise 0 bis 25°C in den Prozess eintritt. Ein allfälliger Schritt zum Vorheizen des Produktes ist somit Bestandteil des Prozesses. Zum Prozess gehören alle Verfahrensstufen, in denen das Produkt behandelt wird. Zum Prozess gehören ausserdem alle Gasströme oder Flüssigkeitsströme, die zum direkten oder indirekten Energieeintrag auf das Produkt verwendet werden.

Zum Prozess gehören somit Verfahrenstufen, in denen das Produkt erwärmt, kristallisiert, gerührt, mit Schleppgas oder unter Vakuum behandelt, gekühlt, bewegt, gemischt oder gefördert wird.

Zu einem Verfahrensschritt, in dem das Produkt durch eine heisse Oberfläche erwärmt wird, gehört somit die Energie, die benötigt wird, um die Oberfläche zu erwärmen. Wird die Oberfläche mittels eines Fluids erwärmt, werden Energieeinträge zur Umwälzung des Fluids, wie auch zur Erhitzung des Fluids berücksichtigt.

Zu einem Verfahrensschritt, in dem das Produkt durch eine Strahlung behandelt, insbesondere erwärmt wird, gehört somit die Energie, die benötigt wird, um die Strahlung, wie zum Beispiel Mikrowellenstrahlung oder Infrarotstrahlung, zu erzeugen.

Zu einem Verfahrensschritt, in dem das Produkt bewegt wird, gehört somit die Energie, mit der das Produkt bewegt wird, wie zum Beispiel Antriebe für Rührwerke, Schleusen oder Schneckenförderer, oder Antriebe zur Bewegung eines Behandlungsapparates oder eines Teiles eines Behandlungsapparates, wie zum Beispiel Drehrohrofen oder vibrierende Siebe.

Ebenso berücksichtigt werden Energieeinträge zur Umwälzung und allfälligen Erhitzung eines Fluids, mit dessen Hilfe das Produkt bewegt wird, wie zum Beispiel Prozessgase, die in Fliessbett- oder Sprudelbettapparaten oder in pneumatischen Fördereinrichtungen verwendet werden.

Zu einem Verfahrensschritt, in dem das Produkt durch ein Fluid, wie zum Beispiel ein Prozessgas behandelt wird, gehören somit die Energieträger, die benötigt werden, um das Fluid umzuwälzen und wenn nötig zu erwärmen. Wird das Fluid im Kreislauf geführt oder zumindest teilweise im Kreislauf geführt, werden Energieeinträge, die zur Reinigung des Fluids benötigt werden, berücksichtigt.

Energieeinträge, die zur Reinigung des Fluids benötigt werden, beinhalten Energieeinträge die benötigt werden, um zum Beispiel eine Waschflüssigkeit umzuwälzen, eine Adsorptionsvorrichtung zu regenerieren oder eine Verbrennung zu betreiben.

Nicht berücksichtigt werden Energieeinträge zur Erzeugung und Umwälzung der Energieträger (=Utilites), wenn diese nicht direkt an den Prozess abgegeben werden.

Als Energieträger gelten: Elektrischer Strom, Kühlwasser, Druckluft, Wärmeträger, wie Dampf oder Wärmeträgeröle oder Prozessgase, wie Stickstoff, CO₂, oder spezielle Gasgemische.

Nicht berücksichtigt werden zum Beispiel:
➢ Energieeinträge zur Umwälzung von Kühlwasser oder Eiswasser, mit denen ein Prozessgasstrom indirekt abgekühlt wird.
➢ Energieeinträge zur Erzeugung von Kühlwasser oder Eiswasser.
➢ Energieeinträge zur Erzeugung von Druckluft für die Prozessregelung.
➢ Energieeinträge zur Erzeugung von Stickstoff oder anderer Prozessgase.
➢ Energieeinträge zur Umwälzung von Wärmeträgern, mit denen ein Prozessgasstrom indirekt aufgeheizt wird.
➢ Energieeinträge zur Erzeugung oder Verteilung von elektrischem Strom.

Nicht berücksichtigt werden ausserdem Energieeinträge zur Aufbereitung von Abwasserströmen oder Waschflüssigkeiten.

### Verfahren

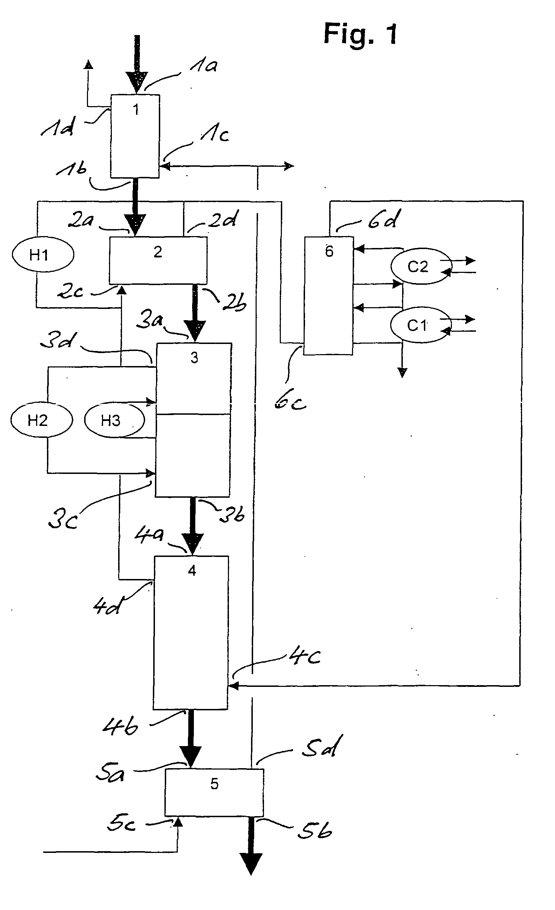

Die Ausführung gemäss Figur 1 sieht vor, dass ein im wesentlichen amorphes Polykondensatprepolymer kontinuierlich in einem Aufheizapparat (1), danach in einem Kristallisationsapparat (2), einem weiteren Aufheizapparat (3), einem Reaktionsapparat (4) und einem Kühlapparat (5) behandelt wird. Der Kristallisationsapparat, der weitere Aufheizapparat und der Reaktionsapparat haben einen zugeordneten im wesentlichen geschlossenen Prozessgaskreislauf. Als Prozessgas im Aufheizapparat und im Kühlapparat wird Luft verwendet. Als Prozessgas im Kristallisationsapparat, im weiteren Aufheizapparat und im Reaktionsapparat wird ein Inertgas verwendet, wovon ein Teil in einem Gaswäscher (6) gereinigt wird. Der Gaswäscher kann in mehreren Stufen, in denen unterschiedliche oder unterschiedlich temperierte Waschflüssigkeiten fliessen / zirkulieren, ausgeführt werden, wovon hier zwei mit den jeweils zugehörenden Kühlern (C1, C2) gezeigt sind. Optional erfolgen weitere Reinigungsstufen zum Beispiel durch den Einsatz von Zyklonen, Filtern, Demistern (Tropfenabscheidern) oder Adsorbern.

Das Inertgas wird in ausreichendem Mass zugegeben, um Verluste, die über die Materialzufuhrleitung in den Inertgasbereich und Materialwegfuhrleitung aus dem Inertgasbereich sowie über allfällige andere Verlustpunkte erfolgen, auszugleichen. Um den Inertgasverlust zu minimieren, erfolgen die Materialzufuhr und die Materialwegfuhr mittels einer Schleuse, insbesondere mittels einer Zellradschleuse.

Optional können auch zwischen Apparaten innerhalb des Inertgasbereichs oder ausserhalb des Inertgasbereichs Schleusen angeordnet sein.

Die Zirkulation der Prozessgase wird durch Gasverdichter, wie zum Beispiel Ventilatoren, Gebläse oder Kompressoren erreicht.

Gemäss einer Ausführung der Erfindung ist eine Gasaustrittsöffnung des Kühlapparates mit einer Gaseintrittsöffnung des ersten Aufheizapparates verbunden, wodurch zumindest ein Teil, des im Kühlprozess erwärmten Prozessgases, seine Energie an das kalte, in den Prozess eintretende Produkt abgeben kann. Über optional eingesetzte Ventile kann die Prozessgasmenge zum Aufheizschritt eingestellt oder geregelt werden.

Die Zufuhr der Prozessluft in den Prozess, insbesondere in den Kühler erfolgt über einen Ansaugfilter.

Zumindest im Kristallisationskreislauf und im Kreislauf des weiteren Aufheizapparates wird das Prozessgas mittels Wärmetauscher (H1 bis Hx) aufgeheizt, um dadurch das Polykondensat aufzuheizen. Das Aufheizen kann dabei über mehrere Stufen erfolgen, wovon nur drei gezeigt sind.

Gemäss eines Unteranspruchs der vorliegenden Erfindung wird die Waschflüssigkeit aus dem Gaswäscher in einer Reaktionsstufe der Polykondensatprepolymerherstellung verwendet, wobei sie zunächst eine Reinigungsstufe, zum Beispiel eine Destillationskolonne durchlaufen kann.

Eine Option sieht vor, dass die Gasreinigung mittels einer katalytischen Nachverbrennung erfolgt, wobei die zusätzlich Aufheizenergie mittels eines Wärmetauschers mehrheitlich zurückgewonnen wird.

Eine weitere Option sieht vor, dass das Polykondensat mittels einer oder mehrerer Fördervorrichtungen, wie zum Beispiel durch eine pneumatische Förderung, von einem Apparat zu einem nächsten transferiert wird.

Durch die oben beschriebenen Optionen erhöht sich der Energieeintrag jeweils um einen kleinen Betrag, bleibt aber innerhalb der beschriebenen Grenzen.

Eine weitere Option sieht vor, dass der oder die Kristallisationsschritte unter Luft erfolgen.

Diese Option erlaubt, dass die Zufuhröffnung für Frischgas in den Kristallisationskreislauf ebenfalls mit der Gasaustrittsöffnung des Kühlers verbunden ist, wodurch sich eine weitere Energieeinsparung erzielen lässt.

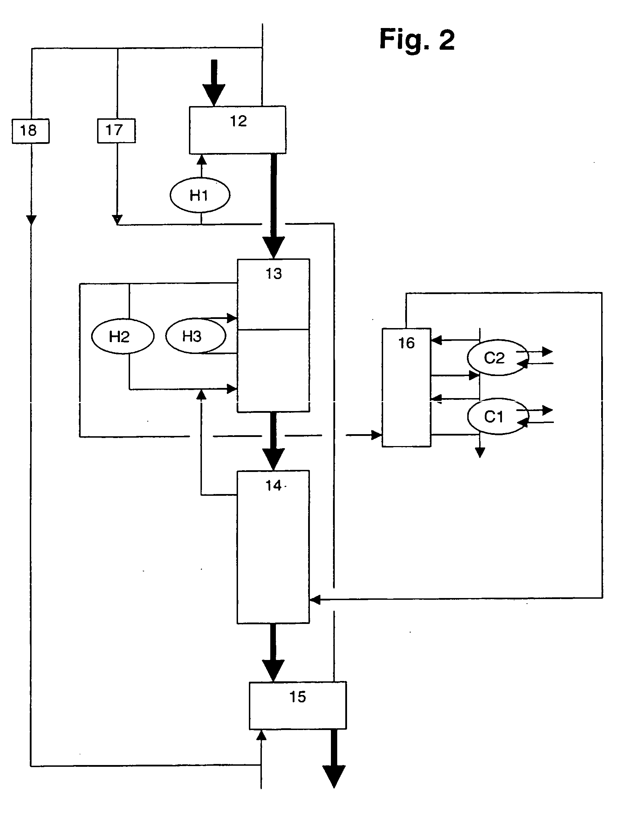

Die Ausführung gemäss Figur 2 basiert im wesentlichen auf der Ausführung gemäss Figur 1 mit dem Unterschied, dass die Prozesswärme aus dem Kühlapparat direkt zur Aufheizung des Produktes im Kristallisationsapparat verwendet wird. Die Ausführung sieht vor, dass ein im wesentlichen amorphes Polykondensatprepolymer kontinuierlich in einem Kristallisationsapparat (12), danach in einem weiteren Aufheizapparat (13), einem Reaktionsapparat (14) und einem Kühlapparat (15) behandelt wird. Der weitere Aufheizapparat und der Reaktionsapparat haben einen zugeordneten im wesentlichen geschlossenen Prozessgaskreislauf. Als Prozessgas im Kristallisationsapparat und im Kühlapparat wird Luft verwendet. Als Prozessgas im weiteren Aufheizapparat und in Reaktionsapparat wird ein Inertgas verwendet, wovon ein Teil in einem Gaswäscher (16) gereinigt wird.

Gemäss einer Ausführung der Erfindung ist eine Gasaustrittsöffnung des Kühlapparates mit einer Gaseintrittsöffnung des Kristallisationsapparates verbunden, wodurch zumindest ein Teil des im Kühlprozess erwärmten Prozessgases seine Energie an das kalte, in den Prozess eintretende Produkt abgeben kann. Bevorzugterweise wird das gesamte Prozessgas aus dem Kühlapparat in den Kristallisationsapparat geleitet. Optional kann zur Erhöhung der Gasmenge, die den Kristallisationsapparat durchströmt, zusätzliches Prozessgas von aussen, von einem weiteren Apparat oder, wie beispielhaft mittels Leitung (17) dargestellt, durch Erzeugung eines Kreislaufes zugeführt werden. Als weitere Option kann ein Kreislauf zwischen Kühlapparat und Kristallisationsapparat, wie beispielhaft mittels Leitung (18) dargestellt, erzeugt werden.

Die Zufuhr der Prozessluft in den Kühler oder die Zufuhr von Austauschgas in den Kristallisator oder den Kühler-Kristallisatorkreislauf erfolgt bevorzugterweise über einen Ansaugfilter.

Weitere Vorteile, Merkmale und Anwendungsmöglichkeiten der Erfindung ergeben sich aus der nun folgenden Beschreibung nicht einschränkend aufzufassender erfindungsgemässer Beispiele anhand der Zeichnung.

Ein granuliertes Polyethylenterephthalat wird mit einer Eintrittstemperatur von 10°C einem Prozess gemäss Figur 1 bestehend aus den Apparaten 1, 2, 3, 4, 5, 6, H1, H2, H3, C1 und C2 zugeführt. Die Durchsatzleistung beträgt 22,9 Tonnen pro Stunde.
Im Aufheizapparat 1, durch den 90% der Luft aus dem Kühler fliessen, wird das Produkt auf 72°C aufgeheizt.
Im Kristallisationsapparat 2 wird das Produkt weiter auf 186 °C aufgeheizt und die Kristallinität auf 3 8% angehoben.
Im Aufheizapparat 3 wird das Produkt in sechs Stufen weiter auf 213 °C aufgeheizt und die Kristallinität auf 45% angehoben.
Im Reaktionsapparat bzw. Reaktor (4) wird die intrinsische Viskosität von 0,62 auf 0,82 angehoben.
In Kreislauf zum Kristallisationsapparat 2 werden 124 Tonnen pro Stunde Stickstoff zirkuliert, der kontinuierlich auf 200°C erwärmt wird.
Im Kreislauf zum Aufheizapparat 3 werden 11 Tonnen pro Stunde Stickstoff in sechs Stufen kontinuierlich zirkuliert. Daraus ergibt sich ein mg/mp von ca. 3: 1. Der Stickstoff wird jeweils auf eine Temperatur zwischen 215°C und 225°C erwärmt und durch das Produkt geführt.
Dem Reaktor werden 10 Tonnen pro Stunde gereinigter Stickstoff zugeführt, der kontinuierlich auf 80°C erwärmt wird.
Die Kühlung erfolgt mit 54 Tonnen pro Stunde Luft.
Die Reinigung des Stickstoffs erfolgt über einen 3-stufigen Gaswäscher, der mit gekühltem Ethylenglykol als Waschflüssigkeit betrieben wird.
Im Gaswäscher werden 7 Tonnen pro Stunde respektive 35 Tonnen pro Stunde und 40 Tonnen pro Stunde Waschflüssigkeit umgewälzt.
Vor den Apparaten 1, 2, 3 und 5 sowie nach dem Kühlapparat 5 wird jeweils eine Schleuse eingesetzt.
Zwischen Apparat 3 und 4 erfolgt eine pneumatische Förderung mit 1 Tonne pro Stunde Prozessgas, das auf 220°C erwärmt wird.

Insgesamt werden dem Prozess 48 kWh/t an Energie für Motoren und 45 kWh/t an Energie für Erhitzer zugeführt, was einem Gesamtverbrauch von 93 kWh/Tonne entspricht.

Hierbei sind Wärmeverluste aus den Apparaten sowie Produkt- und Prozessgasleitungen eingerechnet. Alle Apparate sind isoliert, um deren Oberflächentemperatur unter 50°C zu halten.

In diesem Vergleichsbeispiel wird die Anlage aus Beispiel 1 ohne Apparat 1 und mit einer Gasreinigungsanlage, bestehend aus katalytischer Verbrennung bei 350°C gefolgt von einem Adsorptionstrockner, betrieben. Ein Gaswäscher wird nicht eingesetzt, und die Kühlluft aus Apparat 5 wird nicht im Prozess verwendet.

Insgesamt werden dem Prozess 43 kWh/t an Energie für Motoren und 83 kWh/t an Energie für Erhitzer zugeführt, was einem Gesamtverbrauch von 126 kWh/Tonne entspricht.

## Patentansprüche

1. Verfahren zur kontinuierlichen Herstellung eines hochmolekularen Polykondensates aus einem verfestigten Polykondensatprepolymeren durch Festphasen-Polykondensation, wobei Polykondensationsspaltprodukte aus der Festphasen-Polykondensationsreaktion mittels eines Prozessgases vom Produkt entfernt werden und das Prozessgas anschliessend von den Polykondensationsspaltprodukten gereinigt und im wesentlichen rezykliert wird, **dadurch gekennzeichnet, dass** eine Gasaustrittsöffnung eines Kühlapparates mit einer Gaseintrittsöffnung eines Aufheizapparates verbunden ist, wodurch zumindest ein Teil des im Kühlprozess erwärmten Prozessgases seine Energie an kaltes, in den Prozess eintretendes Produkt abgibt, wobei das Polykondensatprepolymer mit einer Umgebungstemperatur, also unter 40°C, insbesondere zwischen 0 und 25°C dem Prozess zugeführt wird und eine Produkttemperaturerhöhung um zumindest 160°C, insbesondere um zumindest 180°C erfolgt, wobei der spezifische Energieeintrag weniger als 120kWh/t, bevorzugterweise weniger als 110 kWh/t und insbesondere zwischen 70 und 100 kWh/t beträgt.

2. Verfahren gemäss Anspruch 1, **dadurch gekennzeichnet, dass** es zumindest eines der folgenden Merkmale aufweist:
➢ dass das Polykondensatprepolymer im wesentlichen im amorphen Zustand, bevorzugterweise unter 10% Kristallinität dem Prozess zugeführt wird;
➢ dass eine Kristallinitätserhöhung um zumindest 20%, insbesondere um zumindest 30% erfolgt;
➢ dass die Produkttemperatur auf zumindest 185°C, insbesondere zumindest 205°C angehoben wird;
➢ dass der Produktdurchsatz zumindest 30t/Tag, insbesondere zumindest 300t/Tag beträgt;
➢ dass es sich beim Prozessgas um ein Inertgas, wie zum Beispiel Stickstoff oder CO₂, handelt;
➢ dass das Polykondensat im Verlaufe des Prozesses zumindest einmal mit einer Fördervorrichtung auf ein höheres Niveau angehoben wird.

3. Verfahren gemäss einem der vorhergehenden Ansprüche, **dadurch gekennzeichnet, dass** es sich bei dem Polykondensat um ein Polyester, wie zum Beispiel Polyethylenterephthalat (PET), Polybutylenterphthalat (PBT) und Polyethylennaphthalat (PEN) oder eines ihrer Copolymere, insbesondere um ein Polyethylenterephthalat oder eines seiner Copolymere handelt.

4. Verfahren gemäss einem der vorhergehenden Ansprüche, **dadurch gekennzeichnet, dass** die Prozessgasmenge, die gereinigt wird, im Verhältnis zur Produktmenge zwischen 0.1 und 1.5, insbesondere zwischen 0.3 und 1.0 beträgt.

5. Verfahren gemäss einem der vorhergehenden Ansprüche, beinhaltend zumindest einen Schritt zur Kristallisation und zumindest einen Schritt zur Festphasen-Polykondensationsreaktion (SSP-Reaktion), **dadurch gekennzeichnet, dass** jeder Schritt einen zugeordneten Prozessgasstrom aufweist.

6. Verfahren gemäss Anspruch 5, **dadurch gekennzeichnet, dass** die Prozessgasströme miteinander verbunden sind und, dass das Prozessgas von flüchtigen Substanzen, die im Kristallisationskreislauf vom Produkt auf das Prozessgas übergehen, gereinigt wird.

7. Verfahren gemäss Anspruch 5 oder 6, **dadurch gekennzeichnet, dass** weitere Schritte zur Produkterwärmung, Produkttrocknung, Kristallisation, SSP-Reaktion oder Produktkühlung beinhaltet sind.

8. Verfahren zur Herstellung eines hochmolekularen Polykondensates aus einem verfestigten Polykondensatprepolymeren durch Festphasen-Polykondensation gemäss einem der vorhergehenden Ansprüche, beinhaltend zumindest einen Schritt zum Aufheizen des Polykondensates, danach zumindest einen Schritt zur Kristallisation, zumindest einen Schritt zur Festphasen-Polykondensationsreaktion und zumindest einen Schritt zur Kühlung, wobei zumindest ein Schritt zum Aufheizen und ein weiterer Schritt unter Einwirkung eines Prozessgases erfolgt, **dadurch gekennzeichnet, dass** zumindest ein Teil des Prozessgases aus diesem weiteren Schritt verwendet wird, um das Polykondensat im Schritt des Aufheizens vor der Kristallisation aufzuheizen.

9. Verfahren gemäss Anspruch 8, **dadurch gekennzeichnet, dass** das Prozessgas aus einem Schritt zur Kühlung verwendet wird, um das Polykondensat im Schritt des Aufheizens vor der Kristallisation aufzuheizen.

10. Verfahren gemäss einem der vorhergehenden Ansprüche, **dadurch gekennzeichnet, dass** vor einem ersten Schritt zur Kristallisation ein Schritt zum Aufheizen des POlykondensates auf eine Temperatur T_{V} erfolgt, wobei T_{V} größer als 50°C, insbesondere grösser als 75°C ist.

11. Verfahren gemäss einem der vorhergehenden Ansprüche, **dadurch gekennzeichnet, dass** Tv im Bereich Tg - 30°C bis Tg + 30°C, insbesondere im Bereich Tg bis Tg + 20°C liegt, wobei Tg die Glasübergangstemperatur des Polykondensates bezeichnet.

12. Verfahren gemäss einem der vorhergehenden Ansprüche, **dadurch gekennzeichnet, dass** der Schritt zum Aufheizen in einem Fliessbettapparat oder Wirbelbettapparat erfolgt.

13. Verfahren gemäss einem der vorhergehenden Ansprüche, **dadurch gekennzeichnet, dass** im Schritt zum Aufheizen eine Trocknung des Polykondensates auf einen Feuchtigkeitsgehalt zwischen 50ppm Wasser und 2000ppm Wasser, insbesondere zwischen 200ppm Wasser und 1000ppm Wasser erfolgt.

14. Verfahren zur Herstellung eines hochmolekularen Polykondensates aus einem verfestigten Polykondensatprepolymeren durch Festphasen-Polykondensation gemäss einem der vorhergehenden Ansprüche, beinhaltend zumindest einen Schritt zum Kristallisieren des Polykondensates, danach zumindest einen Schritt zur Festphasen-Polykondensationsreaktion und zumindest einen Schritt zur Kühlung, wobei zumindest ein Schritt zum Kristallisieren und ein weiterer Schritt unter Einwirkung eines Prozessgases erfolgt, **dadurch gekennzeichnet, dass** zumindest ein Teil des Prozessgases aus diesem weiteren Schritt verwendet wird, um das Polykondensat im Schritt des Kristallisierens aufzuheizen.

15. Verfahren gemäss Anspruch 14, **dadurch gekennzeichnet, dass** das Prozessgas aus einem Schritt zur Kühlung verwendet wird, um das Polykondensat im Schritt des Kristallisierens aufzuheizen.

16. Verfahren gemäss einem der vorhergehenden Ansprüche, **dadurch gekennzeichnet, dass** im Schritt zur Kristallisation ein Aufheizen des Polykondensates auf eine Temperatur Tc erfolgt, wobei Tc in einen Temperaturbereich liegt, in dem die Kristallisationshalbwertszeit des Polykondensates weniger als das Zehnfache der minimalen Kristallisationshalbwertszeit (t_{½min}) des Polykondensates beträgt, wobei für t_{½min} als Minimalwert 1 Minute eingesetzt wird.

17. Verfahren gemäss Anspruch 16, **dadurch gekennzeichnet, dass** Tc im Bereich 100°C bis 220°C liegt, insbesondere im Bereich 120°C bis 200°C liegt.

18. Verfahren gemäss einem der vorhergehenden Ansprüche, **dadurch gekennzeichnet, dass** die Reinigung des Prozessgases mittels einer Waschflüssigkeit, wie zum Beispiel Ethylenglykol, Butylenglykol oder Wasser erfolgt.

19. Verfahren gemäss Anspruch 18, **dadurch gekennzeichnet, dass** die Waschflüssigkeit anschliessend in einem Verfahrensschritt der Prepolymerherstellung verwendet wird.

20. Verfahren gemäss Anspruch 18, **dadurch gekennzeichnet, dass** die Waschflüssigkeit anschliessend in einem Verfahrensschritt zur Aufbereitung gebrauchter Polykondensate, wie zum Beispiel Polyester-Flaschenschnitzel, verwendet wird.

21. Verfahren gemäss einem der Ansprüche 18 bis 20, **dadurch gekennzeichnet, dass** der spezifische Energieeintrag weniger als 110kWh/t, insbesondere zwischen 70 und 100 kWh/t beträgt.

## Claims

1. A method for continuous production of a high-molecular polycondensate out of a solidified polycondensate prepolymer through solid-state polycondensation wherein polycondensation cleavage products from the solid-state polycondensation reaction are removed from the product by means of a process gas and the process gas is subsequently purified of the polycondensation cleavage products and essentially recycled, **characterized in that** a gas outlet opening of a cooling apparatus is connected to a gas inlet opening of a heating apparatus, so that at least a portion of the process gas heated in the cooling process releases its energy to cold product entering the process, wherein the polycondensate prepolymer is supplied to the process at an ambient temperature, i.e. below 40°C, in particular between 0 and 25°C, and a product temperature elevation by at least 160°C, in particular by at least 180°C takes place, wherein the specific energy input amounts to less than 120 kWh/t, preferably less than 110 kWh/t and in particular between 70 and 100 kWh/t.

2. A method according to claim 1, **characterized in that** it has at least one of the following features:
➢ that the polycondensate prepolymer is supplied to the process essentially in an amorphous state, preferably below 10% crystallinity;
➢ that a crystallinity elevation by at least 20%, in particular by at least 30% takes place;
➢ that the product temperature is raised to at least 185°C, in particular at least 205°C;
➢ that the product throughput amounts to at least 30 t/day, in particular at least 300 t/day;
➢ that the process gas is an inert gas, for example nitrogen or CO₂;
➢ that the polycondensate is raised to a higher level by means of a conveying device at least once in the course of the process.

3. A method according to either of the preceding claims, **characterized in that** the polycondensate is a polyester, for example polyethylene terephthalate (PET), polybutylene terephthalate (PBT) and polyethylene naphthalate (PEN) or one of their copolymers, in particular a polyethylene terephthalate or one of its copolymers.

4. A method according to any one of the preceding claims, **characterized in that** the process gas quantity which is purified ranges between 0.1 and 1.5, in particular between 0.3 and 1.0, relative to the product quantity.

5. A method according to any one of the preceding claims, including at least one step for crystallization and at least one step for solid-state polycondensation (SSP) reaction, **characterized in that** each step has an assigned process gas stream.

6. A method according to claim 5, **characterized in that** the process gas streams are interconnected and **in that** the process gas stream is purified of volatile substances which transfer from the product to the process gas in the crystallization circuit.

7. A method according to claim 5 or 6, **characterized in that** further steps for product heating, product drying, crystallization, SSP reaction or product cooling are included.

8. A method of producing a high-molecular polycondensate out of a solidified polycondensate prepolymer through solid-state polycondensation according to any one of the preceding claims, including at least one step for heating the polycondensate, thereafter at least one step for crystallization, at least one step for solid-state polycondensation reaction and at least one step for cooling, wherein at least one step for heating and one further step involve exposure to a process gas, **characterized in that** at least a portion of the process gas from this further step is used to heat up the polycondensate in the step of heating before crystallization.

9. A method according to claim 8, **characterized in that** the process gas from a step for cooling is used to heat up the polycondensate in the step of heating before crystallization.

10. A method according to any one of the preceding claims, **characterized in that** a first step for crystallization is preceded by a step for heating up the polycondensate to a temperature Tv, where Tv is greater than 50°C, in particular greater than 75°C.

11. A method according to any one of the preceding claims, **characterized in that** Tv is in the range Tg -30°C to Tg + 30°C, in particular in the range Tg to Tg + 20°C, where Tg denotes the glass transition temperature of the polycondenstate.

12. A method according to any one of the preceding claims, **characterized in that** the step for heating takes place in a moving bed apparatus or fluidized bed apparatus.

13. A method according to any one of the preceding claims, **characterized in that** the step for heating is accompanied by a drying of the polycondensate to a moisture content of between 50 ppm of water and 2000 ppm of water, in particular between 200 ppm of water and 1000 ppm of water.

14. A method of producing a high-molecular polycondensate out of a solidified polycondensate prepolymer through solid-state polycondensation according to any one of the preceding claims, including at least one step for crystallization of the polycondensate, thereafter at least one step for solid-state polycondensation reaction and at least one step for cooling, wherein at least one step for crystallization and one further step involve exposure to a process gas, **characterized in that** at least a portion of the process gas from this further step is used to heat up the polycondensate in the step of crystallization.

15. A method according to claim 14, **characterized in that** the process gas from a step for cooling is used to heat up the polycondensate in the step of crystallization.

16. A method according to any one of the preceding claims, **characterized in that** the step for crystallization is accompanied by a heating of the polycondensate to a temperature Tc, where Tc is in a temperature range in which the crystallization half-life of the polycondensate is less than ten times the minimal crystallization half-life (t_{½min}) of the polycondensate, wherein 1 minute is used as the minimal value for t_{½min}.

17. A method according to claim 16, **characterized in that** Tc is in the range 100°C to 220°C, in particular in the range from 120°C to 200°C.

18. A method according to any one of the preceding claims, **characterized in that** the process gas is purified by means of a scrubbing liquid, for example ethylene glycol, butylene glycol or water.

19. A method according to claim 18, **characterized in that** the scrubbing liquid is subsequently used in a process step of prepolymer production.

20. A method according to claim 18, **characterized in that** the scrubbing liquid is subsequently used in a process step of preparing post-use polycondensates, for example polyester bottle chips.

21. A method according to any one of claims 18 to 20, **characterized in that** the specific energy input amounts to less than 110 kWt/t, in particular between 70 and 100 kWh/t.

## Revendications

1. Procédé en vue de la fabrication en continu d'un polycondensat à poids moléculaire élevé à partir d'un prépolymère de polycondensat solidifié par polycondensation en phase solide, les produits de clivage de polycondensation issus de la réaction de polycondensation en phase solide étant éliminés du produit à l'aide d'un gaz de processus et le gaz de processus étant purifié ensuite des produits de clivage de polycondensation et étant pour l'essentiel recyclé, **caractérisé en ce qu'**une ouverture de sortie de gaz d'un appareil de refroidissement est reliée à une ouverture d'entrée de gaz d'un appareil de chauffage, à la suite de quoi au moins une partie du gaz de processus échauffée dans le processus de refroidissement transmet son énergie au produit froid entrant dans le processus, le prépolymère de polycondensat étant acheminé au processus avec une température ambiante, par conséquent en dessous de 40°C, en particulier, comprise entre 0 et 25°C, et une augmentation de température du produit d'au moins 160°C, en particulier d'au moins 180°C, ayant lieu, l'apport spécifique d'énergie étant de moins de 120 kWh/t, de préférence, de moins de 110 kWh/t et, en particulier, compris entre 70 et 100 kWh/t.

2. Procédé selon la revendication 1, **caractérisé en ce qu'**il présente au moins une des caractéristiques suivantes:
➢ le prépolymère de polycondensat est acheminé au processus pour l'essentiel à l'état amorphe, de préférence, à un état en dessous de 10 % de cristallinité ;
➢ une augmentation de cristallinité d'au moins 20 %, en particulier d'au moins 30 %, a lieu ;
➢ la température du produit est augmentée à au moins 185°C, en particulier à au moins 205°C;
➢ Le débit de produit est au moins de 30 t/jour, en particulier, au moins de 300 t/jour ;
➢ il s'agit, dans le cas du gaz de processus, d'un gaz inerte comme par exemple, l'azote ou le CO₂;
➢ le polycondensat, au cours du processus, est soulevé, au moins à une reprise, à l'aide d'un équipement de transport, à un niveau plus élevé.

3. Procédé selon l'une quelconque des revendications précédentes, **caractérisé en ce qu'**il s'agit, dans le cas du polycondensat, d'un polyester comme, par exemple, le téréphtalate de polyéthylène (PET), le téréphtalate de polybutylène (PBT) et le naphtalate de polyéthylène (PEN) ou de l'un de leurs copolymères, en particulier d'un téréphtalate de polyéthylène ou d'un de ses copolymères.

4. Procédé selon l'une quelconque des revendications précédentes, **caractérisé en ce que** le rapport de la quantité de gaz de processus, qui est purifiée, à la quantité de produit, est compris entre 0,1 et 1,5, en particulier, compris entre 0,3 et 1,0.

5. Procédé selon l'une quelconque des revendications précédentes, contenant au moins une étape en vue de la cristallisation et au moins une étape en vue de la réaction de polycondensation en phase solide (réaction SSP), **caractérisé en ce que** chaque étape présente un courant de gaz de processus associé.

6. Procédé selon la revendication 5, **caractérisé en ce que** les courants de gaz de processus sont reliés les uns aux autres et que le gaz de processus est purifié des substances volatiles, qui passent, dans le circuit fermé de cristallisation, du produit au gaz de processus.

7. Procédé selon la revendication 5 ou 6, **caractérisé en ce que** d'autres étapes sont contenues en vue de l'échauffement du produit, du séchage du produit, de la cristallisation, de la réaction SSP ou du refroidissement du produit.

8. Procédé en vue de la fabrication d'un polycondensat à poids moléculaire élevé à partir d'un prépolymère de polycondensat solidifié par polycondensation en phase solide selon l'une quelconque des revendications précédentes, contenant au moins une étape de chauffage du polycondensat, ensuite au moins une étape en vue de la cristallisation, au moins une étape en vue de la réaction de polycondensation en phase solide et au moins une étape en vue du refroidissement, au moins une étape en vue de l'échauffement et une étape supplémentaire opérant sous l'effet du gaz de processus ayant lieu, **caractérisé en ce que** au moins une partie du gaz de processus est utilisée dans cette étape supplémentaire pour échauffer le polycondensat dans l'étape de l'échauffement avant la cristallisation.

9. Procédé selon la revendication 8, **caractérisé en ce que** le gaz de processus provenant d'une étape en vue du refroidissement est utilisé pour échauffer le polycondensat dans l'étape d'échauffement avant la cristallisation.

10. Procédé selon l'une quelconque des revendications précédentes, **caractérisé en ce qu'**a lieu, avant une première étape en vue de la cristallisation, une étape en vue de l'échauffement du polycondensat à une température Tv, la température Tv étant supérieure à 50 °C, en particulier, supérieure à 75°C.

11. Procédé selon l'une quelconque des revendications précédentes, **caractérisé en ce que** la température Tv se situe dans la plage de Tg - 30°C à Tg + 30°C, en particulier, dans la plage de Tg à Tg + 20°C, Tg désignant la température de transition vitreuse du polycondensat.

12. Procédé selon l'une quelconque des revendications précédentes, **caractérisé en ce que** l'étape en vue de l'échauffement se fait dans un appareil à lit fluidisé ou dans un appareil à lit à mouvement tourbillonnaire.

13. Procédé selon l'une quelconque des revendications précédentes, **caractérisé en ce que** dans l'étape de l'échauffement se fait un séchage du polycondensat à une teneur en humidité comprise entre 50 ppm d'eau et 2000 ppm d'eau, en particulier, entre 200 ppm d'eau et 1000 ppm d'eau.

14. Procédé en vue de la fabrication d'un polycondensat à poids moléculaire élevé à partir d'un prépolymère de polycondensat solidifié par polycondensation en phase solide selon l'une quelconque des revendications précédentes, contenant au moins une étape en vue de la cristallisation du polycondensat, ensuite au moins une étape en vue de la réaction de polycondensation en phase solide et au moins une étape en vue du refroidissement, au moins une étape en vue de la cristallisation et une étape supplémentaire opérant sous l'effet du gaz de processus ayant lieu, **caractérisé en ce que** au moins une partie du gaz de processus est utilisée dans cette étape supplémentaire pour échauffer le polycondensat dans l'étape de la cristallisation.

15. Procédé selon la revendication 14, **caractérisé en ce que** le gaz de processus provenant d'une étape en vue du refroidissement est utilisé pour échauffer le polycondensat dans l'étape de cristallisation.

16. Procédé selon l'une quelconque des revendications précédentes, **caractérisé en ce que** dans l'étape en vue de la cristallisation a lieu un échauffement du polycondensat à une température Tc, Tc se situant dans une plage de température dans laquelle le temps de demi-vie de cristallisation du polycondensat est inférieur au décuple du temps de demi-vie de cristallisation minimal (t_{1/2min}) du polycondensat, étant donné que, pour t_{1/2min}, en tant que valeur minimale, on utilise 1 minute.

17. Procédé selon la revendication 16, **caractérisé en ce que** Tc se situe dans la plage de 100°C à 220°C, en particulier dans la plage de 120°C à 200°C.

18. Procédé selon l'une quelconque des revendications précédentes, **caractérisé en ce que** la purification du gaz de processus se fait à l'aide d'un liquide de lavage, comme, par exemple, l'éthylèneglycol, le butylèneglycol ou l'eau.

19. Procédé selon la revendication 18, **caractérisé en ce que** le liquide de lavage est ensuite utilisé dans une étape de procédé de la fabrication du prépolymère.

20. Procédé selon la revendication 18, **caractérisé en ce que** le liquide de lavage est ensuite utilisé dans une étape de procédé en vue de l'apprêt des polycondensats usés, comme, par exemple, de fragments de bouteilles en polyester.

21. Procédé selon l'une quelconque des revendications 18 à 20, **caractérisé en ce que** l'apport spécifique d'énergie est de moins de 110 kWh/t, en particulier, compris entre 70 et 100 kWh/t.
